# EUROPEAN PATENT APPLICATION

(11) **EP 4 832 064 A1**
(43) Date of publication of application: **28.10.2026**
(21) Application number: 24905738.1
(22) Date of filing: 30.09.2024
(51) Int. Cl.: H01M 4/13, H01M 4/36

(54) **POSITIVE ELECTRODE MATERIAL AND PREPARATION METHOD THEREFOR, POSITIVE ELECTRODE, SECONDARY BATTERY, AND ELECTRIC DEVICE**

(30) Priority: 20.12.2023 CN 202311767571
(71) Applicant: BYD Company Limited, Shenzhen, Guangdong 518118 (CN)
(72) Inventor: LIU, Haichang, Shenzhen, Guangdong 518118 (CN); GUO, Guannan, Shenzhen, Guangdong 518118 (CN); HU, Yongyuan, Shenzhen, Guangdong 518118 (CN); YE, Caiyun, Shenzhen, Guangdong 518118 (CN); TAO, Meng, Shenzhen, Guangdong 518118 (CN)
(74) Representative: Mathys & Squire
(86) International application number: PCT/CN2024/122753
(87) International publication number: WO 2025/130248

(57) **Abstract**

A positive electrode material and a preparation method therefor, a positive electrode, a secondary battery, and an electric device. The positive electrode material comprises a core and a shell layer covering the core, wherein the core comprises (LiₐA_{d})₁₊ₓ(M_{1-b}E_{b})₁₋ₓ(O_{1-c}L_{2c})₂, 0<x≤ 0.33, 0<a≤ 1, 0≤b<1, 0≤c<1, 0≤d<1, M comprises at least one of Ni, Co and Mn, A comprises at least one of Na, K and Mg, E comprises at least one of Al, Mg, Cr, Co, Ce, Zr, Mo, Nb, W, Ta, B, Y, Sr, V and Ti, L comprises at least one of F, Cl and Br, the shell layer comprises WO_{2.72}, and the mass ratio of WO_{2.72} in the shell layer is greater than or equal to 90%. The positive electrode material has high charge/discharge energy and excellent electronic conductivity and ionic conductivity, can exhibit good structural stability during battery charge/discharge cycles, and can be used for providing a secondary battery having high capacity, good cycle stability and good rate performance.

## Description

This disclosure claims priority to Chinese Patent Application No. 202311767571.3, filed with the China National Intellectual Property Administration on December 20, 2023 and entitled "POSITIVE ELECTRODE MATERIAL, PREPARATION METHOD THEREFOR, POSITIVE ELECTRODE, SECONDARY BATTERY, AND POWER-CONSUMING DEVICE", which is incorporated herein by reference in its entirety.

### TECHNICAL FIELD

This disclosure relates to the field of battery technologies, and specifically, to a positive electrode material, a preparation method therefor, a positive electrode, a secondary battery, and a power-consuming device.

### BACKGROUND

Lithium-rich transition metal layered oxides, which combine high charge and discharge capacities with low costs, are among next-generation positive electrode materials with broad application prospects. However, during battery cycles, they are highly prone to irreversible oxidation of oxygen atoms, and oxygen atoms in the material form oxygen gas that escapes, which reduces initial Coulombic efficiency of batteries and causes structural fractures and phase transitions of the material, further leading to gradual deactivation of the material and rapid capacity decline of the battery. This severely restricts large-scale application of the lithium-rich transition metal layered oxides.

### SUMMARY

In view of this, an embodiment of this disclosure provides a positive electrode material. The positive electrode material has high charge and discharge energy and good electronic conductivity and ionic conductivity, can exhibit good structural stability during battery charge and discharge cycles, and can be used to provide a secondary battery with high capacity, good cycle stability, and good rate performance.

A first aspect of embodiments of this disclosure provides a positive electrode material, including a core and a shell layer covering the core. A material of the core includes (LiₐA_{d})₁₊ₓ(M_{1-b}E_{b})₁₋ₓ(O_{1-c}L_{2c})₂, 0<x≤0.33, 0<a≤1, 0≤b<1, 0≤c<1, and 0≤d<1; M includes at least one of Ni, Co, and Mn; A includes at least one of Na, K, and Mg; E includes at least one of Cr, Al, Mg, Co, Ce, Zr, Mo, Nb, W, Ta, B, Y, Sr, V, and Ti; and L includes at least one of F, Cl, and Br.

A material of the shell layer includes WO_{2.72}, and a mass percentage of WO_{2.72} in the shell layer is greater than or equal to 90%.

In an implementation, the shell layer (12) further includes a doping element, and the doping element includes at least one of Ni, Co, and Mn.

In an implementation, a mass percentage of the doping element in the shell layer (12) ranges from 0.05% to 10%.

In an implementation, a thickness of the shell layer (12) ranges from 5 nm to 200 nm.

In an implementation, a mass percentage of the element tungsten of the shell layer (12) ranges from 0.05% to 5% based on a mass of the positive electrode material (10).

In an implementation, the core (11) includes single crystal particles of (LiₐA_{d})₁₊ₓ(M_{1-b}E_{b})₁₋ₓ(O_{1-c}L_{2c})₂.

Based on inherent properties of the material of the core, the positive electrode material has high charge and discharge capacities. In addition, the material of the shell layer with a high mass percentage of WO_{2.72} has a large quantity of oxygen vacancies and a stable structure, which can effectively suppress escape of oxygen atoms from (LiₐA_{d})₁₊ₓ(M_{1-b}E_{b})₁₋ₓ(O_{1-c}L_{2c})₂. This improves structural stability of the positive electrode material and optimizes its interface, to improve cycle performance of a battery. In addition, WO_{2.72} has both good electronic conductivity and good ionic conductivity, which can effectively improve rate performance of the positive electrode material. Therefore, the positive electrode material can be used to provide a secondary battery with high capacity, good cycle performance, and good rate performance.

A second aspect of embodiments of this disclosure provides a preparation method for a positive electrode material, including the following operations:
mixing a lithium source, an A source, an M source, an E source, and an L source according to a molar ratio of elements in to-be-prepared (LiₐA_{d})₁₊ₓ(M_{1-b}E_{b})₁₋ₓ(O_{1-c}L_{2c})₂, and performing first calcination under an air atmosphere, to obtain a first material, where M includes at least one of Ni, Co, and Mn, A includes at least one of Na, K, and Mg, E includes at least one of Al, Mg, Cr, Co, Ce, Zr, Mo, Nb, W, Ta, B, Y, Sr, V, and Ti, and L includes at least one of F, Cl, and Br; mixing the first material, a tungsten source, oxalic acid, and a solvent, to obtain a mixture; and performing a heating reaction on the mixture, and performing second calcination on an obtained solidified product under a protective atmosphere, to obtain the positive electrode material.

The positive electrode material includes a core and a shell layer covering the core. The core includes (LiₐA_{d})₁₊ₓ(M₁-_{b}E_{b})₁₋ₓ(O₁-_{c}L_{2c})2, 0<x≤0.33, 0<a≤1, 0≤b<1, 0≤c<1, and 0≤d<1.

A material of the shell layer includes WO_{2.72}, and a mass percentage of WO_{2.72} in the shell layer is greater than or equal to 90%.

In an implementation, performing the heating reaction on the mixture to obtain the solidified product, and performing the second calcination on the obtained solidified product under the protective atmosphere, to obtain the positive electrode material includes: performing the heating reaction on the mixture; sequentially performing solid-liquid separation and drying on the heated mixture to obtain the solidified product; and performing, under the protective atmosphere, the second calcination on the solidified product obtained after the solid-liquid separation and the drying.

In an implementation, the method further includes adding a compound containing a doping element to the mixture, where the doping element includes at least one of Ni, Co, and Mn.

In an implementation, conditions for the second calcination are as follows: maintaining temperature for 3 h to 8 h at 300°C to 700°C under the protective atmosphere.

In an implementation, conditions for the heating reaction are as follows: maintaining temperature of the mixture for 18 h to 36 h at 130°C to 180°C.

The preparation method is simple and easy to implement, has high process reliability and high production efficiency, and can be used for large-scale industrial production.

A third aspect of embodiments of this disclosure provides a positive electrode, including the positive electrode material provided in the first aspect of embodiments of this disclosure. With inclusion of the positive electrode material provided in embodiments of this disclosure, the positive electrode can be used to provide a secondary battery that combines high capacity, good cycle performance, and good rate performance.

A fourth aspect of embodiments of this disclosure provides a secondary battery, including the positive electrode provided in the third aspect of embodiments of this disclosure. The secondary battery can combine high capacity, good cycle performance, and good rate performance.

A fifth aspect of embodiments of this disclosure provides a power-consuming device, including the secondary battery provided in embodiments of this disclosure. Powered by the secondary battery provided in embodiments of this disclosure, the power-consuming device can have good battery life and high charging efficiency, thereby possessing promising market prospects.

### BRIEF DESCRIPTION OF DRAWINGS

FIG. 1 is a schematic diagram of a positive electrode material according to an embodiment of this disclosure;
FIG. 2 is a flowchart of a preparation method for a positive electrode material according to an embodiment of this disclosure;
FIG. 3 is a schematic block diagram of a positive electrode according to an embodiment of this disclosure;
FIG. 4 is a schematic block diagram of a secondary battery according to an embodiment of this disclosure; and
FIG. 5 is a schematic block diagram of a power-consuming device according to an embodiment of this disclosure.
Reference numerals: positive electrode material 10; core 11; shell layer 12; secondary battery 20; positive electrode 22; negative electrode 24; separator 26; power-consuming device 30.

### DESCRIPTION OF EMBODIMENTS

Lithium-rich transition metal layered oxides (Li₁₊ₓM₁₋ₓO₂, 0<x≤0.33) have high capacities, and increasing a proportion of a lithium-rich phase in a material enables the material to have lithium replenishment effects. Therefore, the lithium-rich transition metal layered oxides are promising positive electrode materials. However, during high-voltage formation of a battery, Li₁₊ₓM₁₋ₓO₂ is highly prone to oxidation at a high voltage to release oxygen gas, and oxygen atoms on a surface of a material are likely to escape during cycles. This process is accompanied by a phase transition (from a layered structure to a spinel phase or a rock salt phase) and structural fractures of the material, and may even induce cation mixing, affecting performance of the battery. In addition, Li₁₊ₓM₁₋ₓO₂ has poor conductivity, and under high-voltage formation conditions, a thick interfacial film tends to form on its surface, degrading rate performance of the battery. As a result, large-scale application of the lithium-rich transition metal layered oxides faces certain limitations whether they are used as positive electrode materials or lithium replenishment materials. Although a common practice in the industry is to resolve the foregoing problem through ion doping or material nanocrystallization, improvements are limited.

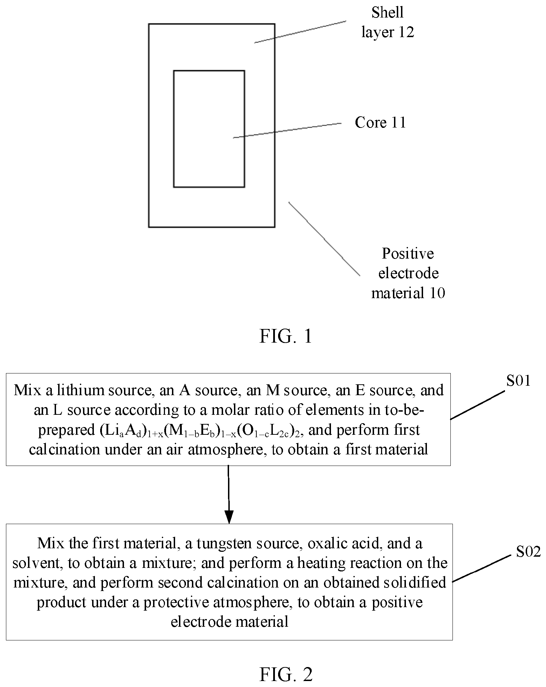

To resolve the foregoing technical problem, an embodiment of this disclosure provides a positive electrode material. FIG. 1 is a schematic diagram of a positive electrode material 10 according to an embodiment of this disclosure. As shown in FIG. 1, the positive electrode material 10 includes a core 11 and a shell layer 12 covering the core. A material of the core includes (LiₐA_{d})₁₊ₓ(M_{1-b}E_{b})₁₋ₓ(O_{1-c}L_{2c})₂, 0<x≤0.33, 0<a≤1, 0≤b<1, 0≤c<1, and 0≤d<1. M includes at least one of Ni, Co, and Mn; A includes at least one of Na, K, and Mg; E includes at least one of Cr, Al, Mg, Co, Ce, Zr, Mo, Nb, W, Ta, B, Y, Sr, V, and Ti; and L includes at least one of F, Cl, and Br. It will be understood that, when b, c, and d are all 0, the material of the core is Li₁₊ₓM₁₋ₓO₂.

A material of the shell layer includes WO_{2.72}, and a mass percentage of WO_{2.72} in the shell layer is greater than or equal to 90%.

Based on inherent properties of the material of the core, the positive electrode material has high charge and discharge capacities. Further, performing doping on Li₁₊ₓM₁₋ₓO₂ can improve structural stability and/or conductivity of Li₁₊ₓM₁₋ₓO₂, to further improve cycle performance and/or rate performance of a final secondary battery. More importantly, WO_{2.72} with oxygen vacancies in its molecular structure exhibits good structural stability and electrochemical stability. Therefore, the material of the shell layer with a high mass percentage of WO_{2.72} has a large quantity of oxygen vacancies and a stable structure, which can effectively suppress escape of oxygen atoms in (LiₐA_{d})₁₊ₓ(M_{1-b}E_{b})₁₋ₓ(O_{1-c}L_{2c})₂. In addition, a physical block effect of the shell layer can reduce a risk of escape of oxygen atoms caused by side reactions occurring when the core is in contact with an electrolyte (for example, a liquid electrolyte). This significantly improves structural stability of the positive electrode material and optimizes its interface, to improve the cycle performance of the battery. In addition, WO_{2.72} has both good electronic conductivity and good ionic conductivity, which can effectively improve rate performance of the positive electrode material. Therefore, the positive electrode material can be used to provide a secondary battery with high capacity, good cycle performance, and good rate performance.

In this embodiment of the disclosure, the mass percentage of WO_{2.72} in the shell layer may be but is not limited to 90%, 91%, 92%, 93%, 94%, 95%, 96%, 97%, 98%, 99%, 99.5%, 100%, or the like. If the mass percentage of WO_{2.72} in the shell layer is excessively low, an oxygen vacancy content in the material of the shell layer decreases, which affects stability of the material of the shell layer and weakens the suppression effect on escape of oxygen atoms from the core, degrading the cycle performance of the final battery. If other components in the shell layer are low-conductivity materials, the rate performance of the final battery is further degraded. In this embodiment of the disclosure, methods for representing WO_{2.72} include X-ray diffraction testing, transmission electron microscope (TEM), energy dispersive spectrometer (EDS), and X-ray photoelectron spectroscopy (XPS).

In this embodiment of this disclosure, when the mass percentage of WO_{2.72} in the shell layer is less than 100%, remaining components may be but are not limited to impurities that adhere to a surface of the positive electrode material during preparation and/or a doping element deliberately doped in WO_{2.72}.

In some implementations of this disclosure, the shell layer further includes a doping element, and the doping element includes at least one of Ni, Co, or Mn. In some specific embodiments, the doping element is doped in a lattice of WO_{2.72}. Valence states of ions formed by the three elements are lower than that of tungsten ions. Doping the elements in the lattice of WO_{2.72} can increase a proportion of oxygen vacancies in WO_{2.72}, and can further suppress escape of oxygen atoms in the core (LiₐA_{d})₁₊ₓ(M_{1-b}E_{b})₁₋ₓ(O_{1-c}L_{2c})₂ during charging and discharging. This can further improve the structural stability of the positive electrode material during charging and discharging, to further improve the cycle performance of the final battery. It will be understood that, doping the doping element in the lattice of WO_{2.72} may cause a change in a lattice parameter, which causes a slight change in a molar stoichiometric amount of the element O in WO_{2.72}. However, because the doping is performed in the lattice of WO_{2.72}, even though the molar stoichiometric amount of the element O changes slightly, it will be considered to fall within the protection scope of this disclosure.

In some implementations of this disclosure, a mass percentage of the doping element in the shell layer ranges from 0.05% to 10%. Controlling the mass percentage of the doping element within the foregoing range can effectively increase the proportion of oxygen vacancies in WO_{2.72} without affecting structural stability of WO_{2.72}, so that interfacial impedance can be reduced, and preparation is easy. For example, the mass percentage of the doping element in the shell layer may be 0.05%, 0.1%, 0.15%, 0.20%, 0.25%, 0.30%, 0.50%, 0.80%, 1.0%, 1.2%, 1.5%, 1.8%, 2.0%, 2.2%, 2.5%, 3.0%, 3.5%, 4.0%, 5.0%, 5.5%, 6.0%, 7.0%, 8.0%, 9.0%, 9.5%, or the like. In some specific implementations, the mass percentage of the doping element in the shell layer ranges from 0.1% to 3%. This can effectively increase the proportion of oxygen vacancies in WO_{2.72} in the shell layer, and can ensure good structural stability of WO_{2.72}, which is more conducive to cycle performance of the battery. In this embodiment of this disclosure, XPS may be used to measure the mass percentage of the doping element in the shell layer.

In some implementations of this disclosure, a thickness of the shell layer ranges from 5 nm to 200 nm. In some specific embodiments, the thickness of the shell layer ranges from 5 nm to 100 nm. This achieves a good effect on oxygen fixation and improvement of conductivity of the material, and can effectively avoid side reactions caused by direct contact between the positive electrode material and the liquid electrolyte, to protect the positive electrode material. For example, the thickness of the shell layer may be but is not limited to 5 nm, 10 nm, 15 nm, 20 nm, 25 nm, 30 nm, 35 nm, 40 nm, 45 nm, 50 nm, 55 nm, 60 nm, 65 nm, 70 nm, 75 nm, 80 nm, 85 nm, 90 nm, 95 nm, 100 nm, 110 nm, 120 nm, 130 nm, 150 nm, 180 nm, 200 nm, or the like.

In some implementations of this disclosure, a mass percentage of the element tungsten of the shell layer in the positive electrode material ranges from 0.05% to 5% based on a mass of the positive electrode material. Because the mass percentage of WO_{2.72} in the shell layer is at least 90%, controlling the mass percentage of the element tungsten of the shell layer in the positive electrode material within the foregoing range also means that a proportion of the material of the shell layer in the positive electrode material is within a suitable range. In particular, when the thickness of the shell layer is constant, further controlling the mass percentage of the element tungsten of the shell layer in the positive electrode material can control density or compactness of the material of the shell layer within a suitable range. In some specific implementations, the mass percentage of the element tungsten of the shell layer in the positive electrode material ranges from 0.2% to 1%. Considering that there may be the doping element in the shell layer, when the mass percentage of the element tungsten of the shell layer is controlled within the foregoing range, the mass percentage of the doping element is not excessively high in remaining mass percentages apart from the element O in WO_{2.72}. Therefore, controlling the percentage of the doping element in the shell layer within an appropriate range is more conducive to improvement of structural stability, ionic conductivity, and electronic conductivity of the positive electrode material. In some specific embodiments, the mass percentage of the element tungsten of the shell layer in the positive electrode material ranges from 0.3% to 0.6%. For example, the mass percentage of the element tungsten of the shell layer in the positive electrode material may be but is not limited to 0.05%, 0.10%, 0.15%, 0.20%, 0.30%, 0.50%, 0.80%, 1.00%, 1.50%, 2.00%, 2.50%, 3.00%, 3.50%, 4.00%, 4.50%, 5.00%, or the like. In this embodiment of this disclosure, the mass percentage of the element tungsten in the positive electrode material may be measured by using X-ray fluorescence spectrometer (XRF), energy dispersive spectrometer (EDS), and X-ray photoelectron spectroscopy (XPS).

It will be understood that, WO_{2.72} in the shell layer has good electronic conductivity, which improves the rate performance of the positive electrode material in terms of electrochemical performance, and reduces powder resistivity of the positive electrode material in terms of intrinsic parameters of the positive electrode material. In some implementations of this disclosure, the powder resistivity of the positive electrode material is measured by using a powder resistivity meter. Under a test pressure of 12 kN, the powder resistivity of the positive electrode material ranges from 0.005 Ω·cm to 200 Ω·cm. For example, under the foregoing test conditions, the powder resistivity of the positive electrode material may be but is not limited to 0.005 Ω·cm, 0.01 Ω·cm, 0.05 Ω·cm, 0.10 Ω·cm, 0.5 Ω·cm, 1.0 Ω·cm, 2.5 Ω·cm, 5.0 Ω·cm, 10.0 Ω·cm, 15.0 Ω·cm, 20.0 Ω·cm, 50.0 Ω·cm, 100 Ω·cm, 200 Ω·cm, or the like.

In some implementations of this disclosure, the core includes single crystal particles of (LiₐA_{d})₁₊ₓ(M_{1-b}E_{b})₁₋ₓ(O_{1-c}L_{2c})₂. In some specific embodiments, the core is single crystal particles of (LiₐA_{d})₁₊ₓ(M_{1-b}E_{b})₁₋ₓ(O_{1-c}L_{2c})₂. Single crystal particles can overcome the susceptibility of polycrystalline materials to crack formation at grain boundaries, to avoid a case in which deoxidation of the material is exacerbated by contact between an uncoated interface and the electrolyte (for example, the liquid electrolyte) in the battery due to grain boundary cracks. In this way, the positive electrode material remains stable during charge and discharge cycles, to improve long-term cycle performance of the final battery.

In some implementations of this disclosure, a D50 particle size of the positive electrode material ranges from 3 µm to 5.5 µm. Controlling the particle size of the positive electrode material within the foregoing range allows a short transmission path of active ions in the positive electrode material to help ensure the rate performance of the final battery, and facilitates achievement of high compaction density to increase capacity of the final battery. For example, the D50 of the positive electrode material may be but is not limited to 3.0 µm, 3.5 µm, 4.0 µm, 4.5 µm, 5.0 µm, 5.5 µm, or the like. In this embodiment of this disclosure, the D50 particle size of the positive electrode material may be measured by using a laser particle size analyzer.

An embodiment of this disclosure further provides a preparation method for a positive electrode material, which may be used to prepare the foregoing positive electrode material. As shown in FIG. 2, the preparation method includes the following steps:
S01: mix a lithium source, an A source, an M source, an E source, and an L source according to a molar ratio of elements in to-be-prepared (LiₐA_{d})₁₊ₓ(M_{1-b}E_{b})₁₋ₓ(O_{1-c}L_{2c})₂, and perform first calcination under an air atmosphere, to obtain a first material, where M includes at least one of Ni, Co, and Mn; A includes at least one of Na, K, and Mg; E includes at least one of Al, Mg, Cr, Co, Ce, Zr, Mo, Nb, W, Ta, B, Y, Sr, V, and Ti; and L includes at least one of F, Cl, and Br.
S02: mix the first material, a tungsten source, oxalic acid, and a solvent, to obtain a mixture; and perform a heating reaction on the mixture, and perform second calcination on an obtained solidified product under a protective atmosphere, to obtain the positive electrode material.

The positive electrode material includes a core and a shell layer covering the core, the core includes (LiₐA_{d})₁₊ₓ(M_{1-b}E_{b})₁₋ₓ(O_{1-c}L_{2c})₂, 0<x≤0.33, 0<a≤1, 0≤b<1, 0≤c<1, and 0≤d<1. A material of the shell layer includes WO_{2.72}, and a mass percentage of WO_{2.72} in the shell layer is greater than or equal to 90%.

The preparation method is simple and easy to implement, has high production efficiency, and can be used for large-scale industrial production.

In this embodiment of this disclosure, in step S01, according to common knowledge in the art, some raw materials may be in relative excess. For example, the lithium source and the A source may be in relative excess. In some embodiments of this disclosure, a ratio of a sum of molar amounts of the element lithium and the element A to a molar amount of the element M is (1.4-1.65):1.

In this embodiment of this disclosure, in step S01, the lithium source, the A source, the M source, the E source, and the L source each may be any compounds that are known in the art and suitable for preparation of lithium-rich transition metal oxides, for example, salts or hydroxides of the element lithium or the element A. For example, the lithium source includes but is not limited to at least one of lithium carbonate, lithium acetate, lithium hydroxide, and the like. When the element A is the element potassium, the A source includes but is not limited to at least one of potassium carbonate, potassium acetate, potassium hydroxide, and the like. The M source includes but is not limited to at least one of hydroxides or salts of manganese (for example, a carbonate of manganese), hydroxides or salts of cobalt (for example, a carbonate of cobalt), hydroxides or salts of nickel (for example, a carbonate of nickel), (Mn_{2/3}Co_{1/6}Ni_{1/6})(OH)₂, and (Mn_{2/3}Co_{1/6}Ni_{1/6})CO₃. A person skilled in the art can make selection as needed, and selection of other element sources is not described in this disclosure.

In some implementations of this disclosure, the M source is a particulate material with a D50 of 3 µm to 5 µm, making it easier to prepare the positive electrode material with a target D50 particle size. For example, the D50 of the M source may be but is not limited to 3.0 µm, 3.2 µm, 3.5 µm, 3.8 µm, 4.0 µm, 4.2 µm, 4.5 µm, 4.8 µm, 5.0 µm, or the like.

In some implementations of this disclosure, in step S01, conditions for the first calcination are as follows: maintaining temperature for 8 h to 15 h at 950°C to 1050°C. This can promote formation of the material of the core into a single crystal structure. For example, holding temperature for the first calcination may be but is not limited to 950°C, 975°C, 1000°C, 1025°C, 1050°C, or the like. For example, holding time for the first calcination may be but is not limited to 8 h, 9 h, 10 h, 11 h, 12 h, 13 h, 14 h, 15 h, or the like.

In some implementations of this disclosure, step S01 further includes crushing and sieving a product obtained through the first calcination, to obtain the first material.

In some implementations of this disclosure, in step S02, a ratio of the element tungsten in the tungsten source to the oxalic acid in amount of substance is 1:(6-10). This makes it easy to prepare WO_{2.72}, and helps further increase the mass percentage of WO_{2.72} in the shell layer. For example, the ratio of the element tungsten in the tungsten source to the oxalic acid in amount of substance may be but is not limited to 1:6, 1:6.5, 1:7, 1:7.5, 1:8, 1:8.5, 1:9, 1:9.5, 1:10, or the like. In some implementations of this disclosure, in step S02, the tungsten source includes but is not limited to WCl₆, Na₂WO₄, K₂WO₄, and (NH₄)₂WO₄.

In some implementations of this disclosure, step S02 further includes adding a compound containing a doping element to the mixture, where the doping element includes but is not limited to at least one of Ni, Co, and Mn. The compound containing the doping element is added to the mixture, so that the doping element can be doped in the material of the shell layer during the second calcination, to prepare the shell layer containing the doping element. The compound containing the doping element includes but is not limited to at least one of oxides, hydroxides, or salts of manganese (for example, a carbonate of manganese), tungsten oxide, hydroxides, or salts of cobalt (for example, a carbonate of cobalt), and tungsten oxide, hydroxides, or salts of nickel (for example, a carbonate of nickel).

In some implementations of this disclosure, in step S02, the first material, the tungsten source, and the oxalic acid are added to the solvent and stirred for 10 min to 30 min, to obtain the mixture.

In some implementations of this disclosure, the solvent includes but is not limited to at least one of isopropanol and ethanediol.

In some implementations of this disclosure, in step S02, conditions for the heating treatment are as follows: maintaining temperature of the mixture for 18 h to 36 h at 130°C to 180°C, that is, performing hydrothermal holding for 18 h to 36 h at 130°C to 180°C.

In step S02, considering that the mixture after the heating reaction may still contain the solvent, in some implementations, solid-liquid separation and drying are sequentially performed on the mixture after the heating reaction, and then the second calcination is performed on the obtained solidified product under the protective atmosphere. In some specific embodiments, the solid-liquid separation is filtration.

In some implementations of this disclosure, in step S02, conditions for the second calcination are as follows: maintaining temperature for 3 h to 8 h at 300°C to 700°C under the protective atmosphere. In this way, a stable shell layer can be formed on a surface of the first material, to obtain the positive electrode material without destroying a structure of the material of the core. In this process, the element M on the surface of the first material may also be partially doped in the shell layer. It will be understood that, when the mixture includes the compound containing the doping element, the doping element is doped in the shell layer during the second calcination. For example, temperature for the second calcination may be 300°C, 350°C, 400°C, 450°C, 500°C, 550°C, 600°C, 650°C, or the like. For example, duration for the second calcination may be 3 h, 4 h, 5 h, 6 h, 7 h, 8 h, or the like.

In this embodiment of this disclosure, the protective atmosphere includes but is not limited to a nitrogen atmosphere, an argon atmosphere, a mixed atmosphere of nitrogen and argon, or the like.

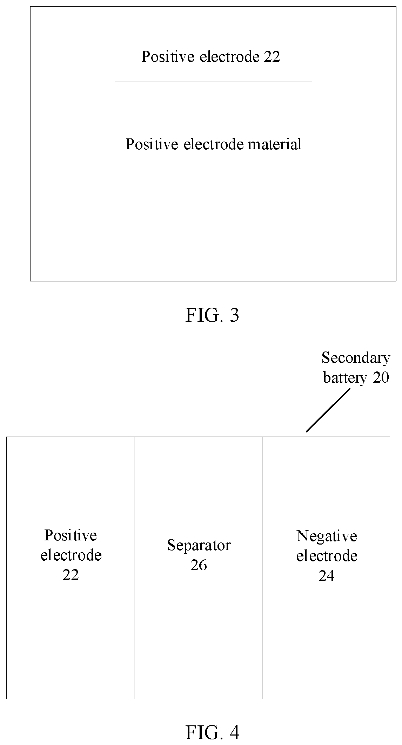

As shown in FIG. 3, an embodiment of this disclosure further provides a positive electrode 22, including the positive electrode material provided in embodiments of this disclosure. With inclusion of the positive electrode material provided in embodiments of this disclosure, the positive electrode can be used to provide a secondary battery that combines high capacity, good cycle performance, and good rate performance.

In some implementations, the positive electrode includes a positive electrode current collector and a positive electrode material layer disposed on at least one surface of the positive electrode current collector, and the positive electrode material layer includes a positive electrode active material, a binder, and an optional conductive agent.

In this embodiment of this disclosure, all positive electrode active materials in the positive electrode material layer may be the positive electrode material provided in embodiments of this disclosure, or positive electrode active materials may include the positive electrode material provided in embodiments of this disclosure and another positive electrode active material. Another positive electrode active material may be any known positive electrode active material of a lithium-ion battery, for example, at least one of a phosphate-based positive electrode active material, an oxide positive electrode active material, and a polyanionic positive electrode active material. The phosphate-based positive electrode active material includes but is not limited to modified or unmodified lithium iron phosphate. The oxide positive electrode active material includes but is not limited to one or more of lithium nickel manganese cobalt oxide, lithium nickel cobalt aluminum oxide, lithium cobalt oxide, and lithium manganese oxide. The polyanionic positive electrode active material includes but is not limited to modified or unmodified lithium vanadium phosphate and the like.

In this embodiment of the disclosure, a material of the positive electrode current collector may be any material known in the art. The binder and conductive agent may be any binder and conductive agent that are known in the art and suitable for the positive electrode.

An embodiment of this disclosure further provides a secondary battery. FIG. 4 is a schematic block diagram of a secondary battery according to an embodiment of this disclosure. As shown in FIG. 4, the secondary battery 20 (briefly referred to as a battery 20) includes the positive electrode 22 provided in embodiments of this disclosure. The secondary battery can combine high capacity, good cycle performance, and good rate performance.

In some implementations of this disclosure, the secondary battery 20 includes the positive electrode 22, a negative electrode 24, and an electrolyte between the positive electrode and the negative electrode. In this embodiment of this disclosure, the negative electrode may be any negative electrode known in the art.

In this embodiment of this disclosure, the secondary battery may be a solid-state battery using a solid electrolyte, a liquid battery using a liquid electrolyte, or a semi-solid-state battery.

In some implementations of this disclosure, the secondary battery 20 includes the positive electrode 22, a negative electrode 24, and a separator 26 and a liquid electrolyte between the positive electrode and the negative electrode.

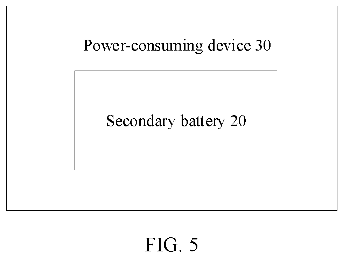

An embodiment of this disclosure further provides a power-consuming device. FIG. 5 is a schematic block diagram of a power-consuming device according to an embodiment of this disclosure. As shown in FIG. 5, the power-consuming device 30 includes but is not limited to including the secondary battery 20 provided in embodiments of this disclosure. The secondary battery 20 includes a positive electrode 22, and the positive electrode 22 is prepared, for example, using the positive electrode material 10 according to embodiments of the present invention. Powered by the secondary battery provided in embodiments of this disclosure, the power-consuming device can have good battery life and high charging efficiency, thereby possessing promising market prospects.

In some implementations of this disclosure, the power-consuming device includes but is not limited to a vehicle and a consumer electronic product. The vehicle includes but is not limited to a new energy vehicle, an electric bicycle, and the like.

The technical solutions of this disclosure are further described below using a plurality of examples.

### Example 1

(1) A lithium source (specifically Li₂CO₃), an M source with a D50 of 3.5 µm (specifically Mn_{0.54}Co_{0.13}Ni_{0.13}(OH)_{1.6}), and an E source (specifically ZrO₂ nanopowder and V₂O₅ nanopowder) are uniformly mixed according to a ratio of to-be-prepared materials of a core, where a molar ratio of Li:(Mn+Co+Ni+Zr+V) is 1.58:1, temperature is maintained for 12 h at 995°C under an air atmosphere, and crushing and sieving are sequentially performed, obtaining a first material.
(2) The first material is added to an isopropanol solution for a stir, and a tungsten source (specifically WCl₆), a compound containing a doping element (specifically Ni(NO₃)₂), and oxalic acid are added, where a ratio of WCl₆ to the oxalic acid in amount of substance is 1:10. After a stir of 30 min, the mixture is transferred to a reactor. Hydrothermal holding is performed for 24 h at 160°C, filtration and vacuum drying are performed, and calcination is performed for 5 h at 350°C under a nitrogen atmosphere, obtaining a positive electrode material.

### Example 2 to Example 5

Differences between Example 2 to Example 5 and Example 1 are that in step (2), an amount of WCl₆ added is slightly adjusted. Parameters of prepared positive electrode materials are summarized in Table 1.

### Example 6

(1) A lithium source (specifically Li₂CO₃), an M source with a D50 of 3.5 µm (specifically Mn_{0.54}Co_{0.13}Ni_{0.13}(OH)_{1.6}), and an E source (specifically ZrO₂ nanopowder and WO₃ nanopowder) are uniformly mixed according to a ratio of to-be-prepared materials of a core, where a molar ratio of Li:(Mn+Co+Ni+Zr+W) is 1.59:1, temperature is maintained for 13 h at 990°C under an air atmosphere, and crushing and sieving are sequentially performed, obtaining a first material.
(2) The first material is added to an isopropanol solution for a stir, and a tungsten source (specifically WCl₆), a compound containing a doping element (specifically Ni(NO₃)₂), and oxalic acid are added, where a ratio of WCl₆ to the oxalic acid in amount of substance is 1:10. After a stir of 30 min, the mixture is transferred to a reactor. Hydrothermal holding is performed for 24 h at 160°C, filtration and vacuum drying are performed, and calcination is performed for 3 h at 450°C under a nitrogen atmosphere, obtaining a positive electrode material.

### Example 7

(1) A lithium source (specifically Li₂CO₃), an M source with a D50 of 3.8 µm (specifically Mn_{0.54}Co_{0.13}Ni_{0.13}(OH)_{1.6}), and an E source (specifically ZrO₂ nanopowder and Al₂O₃ nanopowder) are uniformly mixed according to a ratio of to-be-prepared materials of a core, where a molar ratio of Li:(Mn+Co+Ni+Zr+Al) is 1.58:1, temperature is maintained for 12 h at 1000°C under an air atmosphere, and crushing and sieving are sequentially performed, obtaining a first material.
(2) The first material is added to an isopropanol solution for a stir, and a tungsten source (specifically WCl₆), a compound containing a doping element (specifically Ni(NO₃)₂), and oxalic acid are added, where a ratio of WCl₆ to the oxalic acid in amount of substance is 1:10. After a stir of 30 min, the mixture is transferred to a reactor. Hydrothermal holding is performed for 24 h at 160°C, filtration and vacuum drying are performed, and calcination is performed for 3 h at 550°C under a nitrogen atmosphere, obtaining a positive electrode material.

### Example 8 and Example 9

Differences from Example 1 are that in step (2), an amount of WCl₆ added is slightly adjusted.

### Example 10

Differences from Example 1 are that in step (1), an M source is a large particle precursor with a D50 of 10.5 µm, and in step (2), an amount of WCl₆ added is slightly adjusted.

### Example 11

Differences from Example 1 are that in step (1), a molar ratio of Li:(Mn+Co+Ni+Zr+V) is 1.56:1, and in step (2), an amount of WCl₆ added is slightly adjusted.

### Example 12 to Example 15

Differences from Example 1 are that in step (2), an amount of Ni(NO₃)₂ added is slightly adjusted.

### Example 16

(1) A lithium source (specifically Li₂CO₃) and an M source with a D50 of 3.5 µm (specifically Mn_{0.54}Co_{0.13}Ni_{0.13}(OH)_{1.6}) are uniformly mixed according to a ratio of to-be-prepared materials of a core, where a molar ratio of Li:(Mn+Co+Ni) is 1.58:1, temperature is maintained for 12 h at 995°C under an air atmosphere, and crushing and sieving are sequentially performed, obtaining a first material.
(2) The first material is added to an isopropanol solution for a stir, and a tungsten source (specifically WCl₆), a compound containing a doping element (specifically Ni(NO₃)₂), and oxalic acid are added, where a ratio of WCl₆ to the oxalic acid in amount of substance is 1:10. After a stir of 30 min, the mixture is transferred to a reactor. Hydrothermal holding is performed for 24 h at 160°C, filtration and vacuum drying are performed, and calcination is performed for 5 h at 350°C under a nitrogen atmosphere, obtaining a positive electrode material.

### Example 17

(1) A lithium source (specifically Li₂CO₃), an M source with a D50 of 3.5 µm (specifically Mn_{0.54}Co_{0.13}Ni_{0.13}(OH)_{1.6}), and an E source (specifically ZrO₂ nanopowder and V₂O₅ nanopowder) are uniformly mixed according to a ratio of to-be-prepared materials of a core, where a molar ratio of Li:(Mn+Co+Ni+Zr+V) is 1.58:1, temperature is maintained for 12 h at 995°C under an air atmosphere, and crushing and sieving are sequentially performed, obtaining a first material.
(2) The first material is added to an isopropanol solution for a stir, and a tungsten source (specifically WCl₆) and oxalic acid are added, where a ratio of WCl₆ to the oxalic acid in amount of substance is 1:10. After a stir of 30 min, the mixture is transferred to a reactor. Hydrothermal holding is performed for 24 h at 160°C, filtration and vacuum drying are performed, and calcination is performed for 5 h at 350°C under a nitrogen atmosphere, obtaining a positive electrode material.

### Example 18

(1) A lithium source (specifically Li₂CO₃), an M source with a D50 of 10.5 µm (specifically Mn_{0.54}Co_{0.13}Ni_{0.13}(OH)_{1.6}), and an E source (specifically ZrO₂ nanopowder and V₂O₅ nanopowder) are uniformly mixed according to a ratio of to-be-prepared materials of a core, where a molar ratio of Li:(Mn+Co+Ni+Zr+V) is 1.58:1, temperature is maintained for 12 h at 945°C under an air atmosphere, and crushing and sieving are sequentially performed, obtaining a first material.
(2) The first material is added to an isopropanol solution for a stir, and a tungsten source (specifically WCl₆), a compound containing a doping element (specifically Ni(NO₃)₂), and oxalic acid are added, where a ratio of WCl₆ to the oxalic acid in amount of substance is 1:10. After a stir of 30 min, the mixture is transferred to a reactor. Hydrothermal holding is performed for 24 h at 160°C, filtration and vacuum drying are performed, and calcination is performed for 5 h at 350°C under a nitrogen atmosphere, obtaining a positive electrode material.

To highlight beneficial effects of the examples of this disclosure, the following comparative examples are provided.

### Comparative Example 1

A lithium source (specifically Li₂CO₃), an M source with a D50 of 3.8 µm (specifically Mn_{0.54}Co_{0.13}Ni_{0.13}(OH)_{1.6}), and an E source (specifically ZrO₂ nanopowder and V₂O₅ nanopowder) are uniformly mixed at the same ratio as in Example 1, where a molar ratio of Li:(Mn+Co+Ni+Zr+V) is 1.58:1, temperature is maintained for 12 h at 1000°C under an air atmosphere, and crushing and sieving are sequentially performed, obtaining a positive electrode material.

### Comparative Example 2

A lithium source (specifically Li₂CO₃), an M source with a D50 of 10.5 µm (specifically Mn_{0.54}Co_{0.13}Ni_{0.13}(OH)_{1.6}), and an E source (specifically ZrO₂ nanopowder and Al₂O₃ nanopowder) are uniformly mixed at the same ratio as in Example 7, where a molar ratio of Li:(Mn+Co+Ni+Zr+Al) is 1.58:1, temperature is maintained for 12 h at 940°C under an air atmosphere, and crushing and sieving are sequentially performed, obtaining a positive electrode material.

### Comparative Example 3

(1) A lithium source (specifically Li₂CO₃), an M source with a D50 of 3.5 µm (specifically Mn_{0.54}Co_{0.13}Ni_{0.13}(OH)_{1.6}), and an E source (specifically ZrO₂ nanopowder and V₂O₅ nanopowder) are uniformly mixed according to a ratio of to-be-prepared materials of a core, where a molar ratio of Li:(Mn+Co+Ni+Zr+V) is 1.6:1, temperature is maintained for 12 h at 995°C under an air atmosphere, and crushing and sieving are sequentially performed, obtaining a first material.
(2) The first material, β-WO_{2.9} nanopowder, and WO_{2.72} nanopowder are uniformly mixed, where a mass ratio of β-WO_{2.9} to WO_{2.72} is 9:1, and then calcination is performed for 5 h at 450°C, obtaining a finished positive electrode material.

**Table 1**

| Cases | Material of a core | Mass percentage of WO_{2.72} in a shell layer | Doping element in the shell layer and mass percentage | Thickness of the shell layer | Mass percentage of the element tungsten of the shell layer in a positive electrode material | Core: single crystal/ polycry stal |
|---|---|---|---|---|---|---|
| Example 1 | Li_{1.2}Mn_{0.515}Co_{0.13}Ni_{0.13} Zr_{0.015}V_{0.01}O₂ | 95% | Ni: 0.1% | 10 nm | 0.2% | Single crystal |
| Example 2 | Li_{1.2}Mn_{0.515}Co_{0.13}Ni_{0.13} Zr_{0.015}V_{0.01}O₂ | 95% | Ni: 0.1% | 20 nm | 0.4% | Single crystal |
| Example 3 | Li_{1.2}Mn_{0.515}Co_{0.13}Ni_{0.13} Zr_{0.015}V_{0.01}O₂ | 95% | Ni: 0.1% | 30 nm | 0.6% | Single crystal |
| Example 4 | Li_{1.2}Mn_{0.515}Co_{0.13}Ni_{0.13} Zr_{0.015}V_{0.01}O₂ | 95% | Ni: 0.1% | 40 nm | 0.8% | Single crystal |
| Example 5 | Li_{1.2}Mn_{0.515}Co_{0.13}Ni_{0.13} Zr_{0.015}V_{0.01}O₂ | 95% | Ni: 0.1% | 50 nm | 1.0% | Single crystal |
| Example 6 | Li_{1.2}Mn_{0.52}Co_{0.13}Ni_{0.13} Zr_{0.015}W_{0.005}O₂ | 95% | Ni: 0.1% | 30 nm | 0.6% | Single crystal |
| Example 7 | Li_{1.2}Mn_{0.525}Co_{0.1}Ni_{0.13} Zr_{0.015}Al_{0.03}O₂ | 95% | Ni: 0.1% | 30 nm | 0.6% | Single crystal |
| Example 8 | Li_{1.2}Mn_{0.515}Co_{0.13}Ni_{0.13} Zr_{0.015}V_{0.01}O₂ | 95% | Ni: 0.1% | 200 nm | 5% | Single crystal |
| Example 9 | Li_{1.2}Mn_{0.515}Co_{0.13}Ni_{0.13} Zr_{0.015}V_{0.01}O₂ | 95% | Ni: 0.1% | 1 nm | 0.02% | Single crystal |
| Example 10 | Li_{1.2}Mn_{0.515}Co_{0.13}Ni_{0.13} Zr_{0.015}V_{0.01}O₂ | 90% | Ni: 0.1% | 20 nm | 0.4% | Polycr ystal |
| Example 11 | Li_{1.2}Mn_{0.515}Co_{0.13}Ni_{0.13} Zr_{0.015}V_{0.01}O₂ | 98% | Ni: 0.1% | 20 nm | 0.4% | Single crystal |
| Example 12 | Li_{1.2}Mn_{0.515}Co_{0.13}Ni_{0.13} Zr_{0.015}V_{0.01}O₂ | 95% | Ni: 3% | 20 nm | 0.4% | Single crystal |
| Example 13 | Li_{1.2}Mn_{0.515}Co_{0.13}Ni_{0.13} Zr_{0.015}V_{0.01}O₂ | 95% | Ni: 0.5% | 20 nm | 0.4% | Single crystal |
| Example 14 | Li_{1.2}Mn_{0.515}Co_{0.13}Ni_{0.13} Zr_{0.015}V_{0.01}O₂ | 95% | Ni: 0.02% | 20 nm | 0.4% | Single crystal |
| Example 15 | Li_{1.2}Mn_{0.515}Co_{0.13}Ni_{0.13} Zr_{0.015}V_{0.01}O₂ | 95% | Ni: 1% | 20 nm | 0.4% | Single crystal |
| Example 16 | Li_{1.2}Mn_{0.54}Co_{0.1}Ni_{0.13}O ₂ | 95% | Ni: 0.1% | 20 nm | 0.4% | Single crystal |
| Example 17 | Li_{1.2}Mn_{0.515}Co_{0.13}Ni_{0.13} Zr_{0.015}V_{0.01}O₂ | 95% | / | 20 nm | 0.4% | Single crystal |
| Example 18 | Li_{1.2}Mn_{0.515}Co_{0.13}Ni_{0.13} Zr_{0.015}V_{0.01}O₂ | 95% | Ni: 0.1% | 20 nm | 0.4% | Polycr ystal |
| Comparative Example 1 | Li_{1.2}Mn_{0.515}Co_{0.13}Ni_{0.13} Zr_{0.015}V_{0.01}O₂ | / | / | / | / | Single crystal |
| Comparative Example 2 | Li_{1.2}Mn_{0.525}Co_{0.1}Ni_{0.13} Zr_{0.015}Al_{0.03}O₂ | / | / | / | / | Polycrystal |
| Comparative Example 3 | Li_{1.2}Mn_{0.515}Co_{0.13}Ni_{0.13} Zr_{0.015}V_{0.01}O₂ | 83% | / | 20 nm | 0.4% | Single crystal |

### Performance tests

(1) The positive electrode material, a binder (specifically PVDF), and a conductive agent (specifically conductive carbon black) in each example and comparative example are mixed at a mass ratio of 95:2:3 and dispersed in a solvent (specifically N-methylpyrrolidone) for uniform mixing, to obtain a positive electrode slurry, where each positive electrode slurry has the same solid content.

The positive electrode slurry is applied to two opposite surfaces of a positive electrode current collector (specifically aluminum foil), and drying, calendering, and slitting are performed, to obtain a positive electrode in each example and comparative example.

Each positive electrode, a separator, and a lithium metal sheet are stacked, and assembled in a glovebox, and a liquid electrolyte is injected, to prepare a button cell. The liquid electrolyte is an organic solvent containing a lithium salt, with a lithium salt concentration of 1 mol/L, and in the organic solvent, a mass ratio of ethylene carbonate to ethyl methyl carbonate to dimethyl carbonate is 3:6:1, and a mass fraction of vinylene carbonate is 1%.

(2) A test for initial discharge specific capacity and initial Coulombic efficiency is as follows: each test battery prepared in the foregoing steps is connected to a battery cabinet, charged at a constant current of 0.1C to reach 4.8 V, then charged at a constant voltage until the current is less than or equal to 0.02C, rested for 30 min, and then discharged at a constant current of 0.1C to reach 3 V. Capacity of initial charging is recorded to calculate initial charge specific capacity of the battery, where initial Coulombic efficiency=initial discharge capacity/initial charge capacity×100%. Results are summarized in Table 2.

A cycle performance test is as follows: under a condition of 25±2°C, charging is performed at a constant current of 1C to reach 4.6 V, then charging is performed at a constant voltage until the current is less than or equal to 0.02C, and after a rest of 10 min, discharging is performed at a constant current of 1C to reach 3.0 V. A battery capacity retention rate after 100 cycles is recorded. Results are summarized in Table 2.

A rate performance test is as follows: discharge specific capacities of each battery at 2C and 0.1C are measured at 25±2°C, with a voltage range of 2.5 V to 4.3 V. Test results are summarized in Table 2.

Alternating current impedance: alternating current impedance of each battery is measured at 25°C, with a frequency range of 0.05 Hz to 100 kHz and an amplitude of 5 mV, and then Zview software is used for fitting to obtain Rs and Rct. Ohmic resistance (Rs) and charge transfer resistance (Rct) are summarized in Table 2.

**Table 2**

| Cases | Initial discharge specific capacity (mAh/g) | Initial Coulombic efficiency | (2C/0.1C) | Capacity retention rate after cycles at a room temperature | Rs (Ω)/Rct (Ω) |
|---|---|---|---|---|---|
| Example 1 | 236.3 | 67.5% | 88.0% | 92.8% | Rs=2.73 |
| | | | | | Rct=3.53 |
| Example 2 | 237.5 | 67.8% | 88.3% | 93.1% | Rs=2.70 |
| | | | | | Rct=3.44 |
| Example 3 | 238.2 | 68.0% | 88.6% | 93.6% | Rs=2.64 |
| | | | | | Rct=3.23 |
| Example 4 | 237.3 | 68.3% | 88.9% | 93.1% | Rs=2.60 |
| | | | | | Rct=3.18 |
| Example 5 | 235.5 | 68.8% | 89.2% | 92.3% | Rs=2.57 |
| | | | | | Rct=3.06 |
| Example 6 | 238.5 | 68.2% | 89.2% | 93.7% | Rs=2.53 |
| | | | | | Rct=3.15 |
| Example 7 | 237.1 | 67.3% | 88.9% | 94.0% | Rs=2.45 |
| | | | | | Rct=3.04 |
| Example 8 | 224.5 | 69.5% | 90.3% | 77.8% | Rs=2.46 |
| | | | | | Rct=2.87 |
| Example 9 | 234.1 | 66.8% | 83.4% | 79.5% | Rs=2.93 |
| | | | | | Rct=5.7 |
| Example 10 | 235.2 | 67.0% | 86.2% | 90.5% | Rs=3.32 |
| | | | | | Rct=4.35 |
| Example 11 | 240.5 | 68.7% | 91.6% | 94.3% | Rs=2.21 |
| | | | | | Rct=2.76 |
| Example 12 | 237.3 | 67.6% | 89.3% | 88.6% | Rs=2.51 |
| | | | | | Rct=3.03 |
| Example 13 | 236.5 | 67.5% | 88.2% | 92.5% | Rs=2.66 |
| | | | | | Rct=3.43 |
| Example 14 | 236.0 | 67.2% | 87.1% | 86.2% | Rs=2.83 |
| | | | | | Rct=3.75 |
| Example 15 | 236.8 | 67.5% | 88.7% | 90.8% | Rs=2.60 |
| | | | | | Rct=3.23 |
| Example 16 | 235.1 | 67.2% | 87.8% | 90.5% | Rs=2.85 |
| | | | | | Rct=3.76 |
| Example 17 | 236.5 | 67.6% | 86.5% | 85.7% | Rs=3.23 |
| | | | | | Rct=4.25 |
| Example 18 | 239.0 | 68.3% | 86.8% | 91.0% | Rs=2.68 |
| | | | | | Rct=3.46 |
| Comparative Example 1 | 230.5 | 65.9% | 71.8% | 60.6% | Rs=3.53 |
| | | | | | Rct=17.8 |
| Comparative Example 2 | 231.9 | 66.3% | 70.8% | 61.3% | Rs=3.50 |
| | | | | | Rct=16.7 |
| Comparative Example 3 | 233.6 | 66.7% | 75.6% | 72.5% | Rs=3.12 |
| | | | | | Rct=10.6 |

It will be understood from the data in Table 1 and Table 2 that, the positive electrode materials provided in the examples of this disclosure combine high initial discharge capacity and good initial cycle discharge efficiency. More importantly, in comparison with the positive electrode materials in the comparative examples, the capacity retention rates, after cycles at the room temperature, of the positive electrode materials in the examples are significantly increased, indicating that all the positive electrode materials in the examples of this disclosure exhibit high structural stability during long-term cycles of the batteries. In addition, the positive electrode materials in the examples of this disclosure can reduce Rs and Rct of the batteries, exhibiting good rate performance. Overall electrochemical performance of all the materials in the examples is better than that of the materials in the comparative examples.

It will be understood from comparison between the data of Example 2 and the data of Example 18 that, when the material of the core is the single crystal (Example 2), cycle performance of the material can be further improved, and this is also more conducive to improvement of rate performance of the battery. It will be understood from comparison between the result of Example 2 and the results of Examples 12 to 15 that, when a content of the doping element is within the range further suggested in embodiments of this disclosure, overall performance of the final battery is better. It will be understood from comparison between the data of Example 2 and the data of Example 17 that, when the shell layer of the positive electrode material contains the doping element (Example 2), this is more conducive to improvement of electronic/ionic conductivity of the positive electrode material, and can further improve structural stability of the positive electrode material during charging and discharging, to significantly improve cycle performance of the battery.

The foregoing descriptions are example implementations of this disclosure. It will be noted that, a person of ordinary skill in the art can further make several improvements and refinements without departing from the principle of this disclosure, and these improvements and refinements shall fall within the protection scope of this disclosure.

## Claims

1. A positive electrode material (10), comprising a core (11) and a shell layer (12) covering the core (11), wherein the core (11) comprises (LiₐA_{d})₁₊ₓ(M_{1-b}E_{b})₁₋ₓ(O_{1-c}L_{2c})₂, 0<x≤0.33, 0<a≤1, 0≤b<1, 0≤c<1, and 0≤d<1; M comprises at least one of Ni, Co, and Mn; A comprises at least one of Na, K, and Mg; E comprises at least one of Al, Mg, Cr, Co, Ce, Zr, Mo, Nb, W, Ta, B, Y, Sr, V, and Ti; and L comprises at least one of F, Cl, and Br; and
the shell layer (12) comprises WO_{2.72}, and a mass percentage of WO_{2.72} in the shell layer (12) is greater than or equal to 90%.

2. The positive electrode material (10) according to claim 1, wherein the shell layer (12) further comprises a doping element, and the doping element comprises at least one of Ni, Co, and Mn.

3. The positive electrode material (10) according to claim 2, wherein a mass percentage of the doping element in the shell layer (12) ranges from 0.05% to 10%.

4. The positive electrode material (10) according to any one of claims 1 to 3, wherein a thickness of the shell layer (12) ranges from 5 nm to 200 nm.

5. The positive electrode material (10) according to any one of claims 1 to 4, wherein based on a mass of the positive electrode material (10), a mass percentage of the element tungsten of the shell layer (12) ranges from 0.05% to 5%.

6. The positive electrode material (10) according to any one of claims 1 to 5, wherein the core (11) comprises single crystal particles of the (LiₐA_{d})₁₊ₓ(M_{1-b}E_{b})₁₋ₓ(O_{1-c}L_{2c})₂.

7. A preparation method for a positive electrode material, comprising:
mixing a lithium source, an A source, an M source, an E source, and an L source according to a molar ratio of elements in to-be-prepared (LiₐA_{d})₁₊ₓ(M_{1-b}E_{b})₁₋ₓ(O_{1-c}L_{2c})₂, and performing first calcination (S01) under an air atmosphere, to obtain a first material, wherein M comprises at least one of Ni, Co, and Mn; A comprises at least one of Na, K, and Mg; E comprises at least one of Al, Mg, Cr, Co, Ce, Zr, Mo, Nb, W, Ta, B, Y, Sr, V, and Ti; and L comprises at least one of F, Cl, and Br;
mixing the first material, a tungsten source, oxalic acid, and a solvent, to obtain a mixture; and
performing a heating reaction on the mixture to obtain a solidified product, and performing second calcination (S02) on the obtained solidified product under a protective atmosphere, to obtain the positive electrode material, wherein
the positive electrode material comprises a core and a shell layer covering the core, the core comprises (LiₐA_{d})₁₊ₓ(M_{1-b}E_{b})₁₋ₓ(O_{1-c}L_{2c})₂, 0<x≤0.33, 0<a≤1, 0≤b<1, 0≤c<1, and 0≤d<1; and
a material of the shell layer comprises WO_{2.72}, and a mass percentage of WO_{2.72} in the shell layer is greater than or equal to 90%.

8. The preparation method for the positive electrode material according to claim 7, wherein performing the heating reaction on the mixture to obtain the solidified product, and performing the second calcination on the obtained solidified product under the protective atmosphere, to obtain the positive electrode material comprises:
performing the heating reaction on the mixture;
sequentially performing solid-liquid separation and drying on the heated mixture to obtain the solidified product; and
performing, under the protective atmosphere, the second calcination on the solidified product obtained after the solid-liquid separation and the drying.

9. The preparation method for the positive electrode material according to claim 7, further comprising adding a compound containing a doping element to the mixture, wherein the doping element comprises at least one of Ni, Co, and Mn.

10. The preparation method for the positive electrode material according to any one of claims 7 to 9, wherein conditions for the second calcination are as follows: maintaining temperature for 3 h to 8 h at 300°C to 700°C under the protective atmosphere.

11. The preparation method for the positive electrode material according to any one of claims 7 to 9, wherein conditions for the heating reaction are as follows: maintaining temperature of the mixture for 18 h to 36 h at 130°C to 180°C.

12. A positive electrode (22), comprising the positive electrode material (10) according to any one of claims 1 to 6 or the positive electrode material prepared by using the preparation method for the positive electrode material according to claim 7 or 8.

13. A secondary battery (20), wherein the secondary battery (20) comprises the positive electrode (22) according to claim 12.

14. A power-consuming device (30), wherein the power-consuming device (30) comprises the secondary battery (20) according to claim 13.
